# EUROPÄISCHE PATENTSCHRIFT

(11) **EP 2 726 437 B1**
(45) Veröffentlichungstag und Bekanntmachung des Hinweises auf die Patenterteilung: **30.05.2018**
(21) Anmeldenummer: 13720316.2
(22) Anmeldetag: 24.04.2013
(51) Int. Cl.: C04B 35/64, C04B 35/66, C04B 35/42, C04B 35/12, F27D 1/00

(54) **VERSATZ ZUR ERSTELLUNG EINES FEUERFESTEN WERKSTOFFS, EIN FEUERFESTER WERKSTOFF SOEIE EIN VERFAHREN ZUR HERSTELLUNG EINES FEUERFESTEN WERKSTOFFES**
METHOD FOR CREATING A REFRACTORY MATERIAL, A REFRACTORY MATERIAL AND A PROCESS FOR THE PRODUCTION OF A REFRACTORY MATERIAL
MELANGE DESTINÉE À CRÉER UNE MATIÈRE REFRACTAIRE, MATIERE REFRACTAIRE ET PROCÉDÉ DE FABRICATION D'UNE MATIÈRE PREMIÈRE

(30) Priorität: 28.09.2012 EP 12186593
(43) Veröffentlichungstag der Anmeldung: 07.05.2014
(73) Patentinhaber: Refractory Intellectual Property GmbH & Co. KG, 1100 Wien (AT)
(72) Erfinder: DJURICIC, Boro, 8700 Leoben (AT); NILICA, Roland, 8715 Feistritz (AT); SANTOWSKI, Klaus, 8130 Frohnleiten (AT)
(74) Vertreter: Berkenbrink, Kai-Oliver
(86) Internationale Anmeldenummer: PCT/EP2013/058497
(87) Internationale Veröffentlichungsnummer: WO 2014/048586

(56) Entgegenhaltungen:
- EP-A1- 0 940 376
- EP-A2- 0 573 029
- WO-A1-2012/110923
- WO-A2-2004/063652
- DE-A1- 1 571 328
- GB-A- 1 533 890
- JP-A- 1 061 351
- US-A- 3 194 672
- US-A- 3 551 172
- US-A- 4 141 743
- US-A- 4 999 325
- US-A- 5 180 698
- MATTEUCCI ET AL: "Crystal structure, optical properties and colouring performance of karrooite MgTi2O5 ceramic pigments", JOURNAL OF SOLID STATE CHEMISTRY, ORLANDO, FL, US, Bd. 180, Nr. 11, 1. November 2007 (2007-11-01), Seiten 3196-3210, XP022352167, ISSN: 0022-4596, DOI: 10.1016/J.JSSC.2007.08.029

## Beschreibung

Die Erfindung betrifft einen Versatz zur Erstellung eines gesintertes Chromoxid enthaltenden feuerfesten Werkstoffs, einen gesintertes Chromoxid enthaltenden feuerfesten Werkstoff, ein Verfahren zur Herstellung eines gesintertes Chromoxid enthaltenden feuerfesten Werkstoffs sowie eine Verwendung von Magnesiumtitanat.

Der Begriff "feuerfester Werkstoff" im Sinne der Erfindung bezeichnet insbesondere keramische Erzeugnisse mit einer Einsatztemperatur von über 600 °C und bevorzugt feuerfeste Werkstoffe gemäß DIN 51060, also Werkstoffe mit einem Kegelfallpunkt größer SK17.

Feuerfeste Werkstoffe sind in Form von geformten feuerfesten Erzeugnissen, also beispielsweise Steinen, und ungeformten feuerfesten Erzeugnissen, also insbesondere Feuerbetonen, feuerfesten Massen sowie feuerfesten Mörteln bekannt.

Feuerfeste Werkstoffe bauen insbesondere auf keramischen Rohstoffen auf, insbesondere auf den Oxiden Siliciumdioxid (SiO₂), Aluminiumoxid (Al₂O₃), Magnesiumoxid (MgO), Calciumoxid (CaO), Zirkondioxid (ZrO₂) und Chromoxid (Cr₂O₃). Da Chromoxid (Cr₂O₃) insbesondere auch die Eigenschaft hat, die Korrosionsbeständigkeit feuerfester Werkstoffe insbesondere gegenüber aggressiven Schmelzen und Schlacken, zu erhöhen, werden feuerfeste Werkstoffe mit einem hohen Anteil an Chromoxid (Cr₂O₃) eingesetzt, soweit eine hohe Korrosionsbeständigkeit feuerfester Werkstoffe gewünscht ist.

Zur Herstellung feuerfester Werkstoffe werden feuerfeste Versätze verwendet. Diese Versätze umfassen insbesondere die Komponenten, aus denen bei einem keramischen Brand der feuerfeste Werkstoff gebildet wird. Zur Herstellung des feuerfesten Werkstoffs wird der Versatz in der Regel zunächst mit einem Binder vermischt und anschließend gebrannt. Soweit durch den Versatz ein geformtes feuerfestes Erzeugnis erstellt werden soll, wird der Versatz nach seiner Vermischung mit dem Binder und vor dem Brand geformt.

Beim Brand kommt es insbesondere zu einer Versinterung der Komponenten des Versatzes. Nach dem Brand erhält man einen gesinterten keramischen feuerfesten Werkstoff.

Beim Brand und der Sinterung von Versätzen mit einem Anteil an Chromoxid (Cr₂O₃) ist die Verdichtung schwierig, da abhängig von Sauerstoff-Partialdruck und Temperatur Chromoxide mit hohem Dampfdruck entstehen. Die Brennbedingungen sind daher im Hinblick auf die Brennatmosphäre und den Partialdruck der Brenngase genau einzustellen.

Je nach Sauerstoffpartialdruck beim Brennen kann Chrom in den Oxidationszahlen (Oxidationsstufen) +6, +4, +3 oder +2 sowie, bei metallischem Chrom, in der Oxidationsstufe 0 vorliegen. Mit Ausnahme von Chromoxid in Form von Cr₂O₃, in dem Chrom mit einer Oxidationszahl von +3 vorliegt, weisen alle anderen Chromoxide einen hohen Dampfdruck auf. Insbesondere beim Brand und der Sinterung von Versätzen mit einem hohen Anteil an Chromoxid werden daher Sinterhilfsmittel benötigt, um eine Sinterung des Chromoxids beim Brand erreichen zu können. Zudem müssen die Brennbedingungen, wie vorstehend ausgeführt, bezüglich der Brennatmosphäre und des Partialdrucks des Sauerstoffs sehr präzise eingestellt sein.

Als Sinterhilfsmittel für Chromoxid sind beispielsweise Zusätze in Form von Zirkondioxid, Titandioxid, Magnesiumoxid oder Silikaten bekannt.

Jedoch auch mit solchen Sinterhilfsmitteln im Versatz ist es regelmäßig sehr problematisch, einen Versatz mit einem hohen Anteil an Chromoxid zu einem feuerfesten Werkstoff zu brennen beziehungsweise das Chromoxid beim Brand ausreichend dicht zu sintern. Insbesondere ist es problematisch, feuerfeste Werkstoffe mit einem hohen Anteil an Chromoxid möglichst dicht zu sintern.

Es hat in der Vergangenheit daher nicht an Versuchen gefehlt, Technologien zur Verfügung zu stellen, durch die möglichst dichte feuerfeste Werkstoffe mit einem hohen Anteil an gesintertem Chromoxid zur Verfügung gestellt werden können. In der EP 0 546 432 B1 wird beispielsweise eine entsprechende Technologie beschrieben. Danach werden Chromoxid und Titanoxid gemischt, geformt und in reduzierender Atmosphäre in einem ersten Brennvorgang gebrannt, zerkleinert, mit nicht-gebranntem Chromoxid gemischt, geformt und schließlich in einem zweiten Brennvorgang reduzierend gebrannt. Ein solches Verfahren erfordert demnach zwei Brennvorgänge und ist insoweit nur kostenintensiv durchführbar.

US 3,194,672 offenbart einen Versatz, der 70 Masse-% MgO und 30 Masse-% Chromerz umfasst, wobei der Versatz ferner TiO₂ in Form von Magnesiumtitanat umfassen kann. JP 01061351 A offenbart ein Erzeugnis auf Basis MgCr₂O₄-TiO₁,₅₋₂, wobei das Erzeugnis aus einer Rohstoffmischung aus MgCr₂O₄ und TiO₂ sowie wenigstens einem Precursor basiert, wobei als Precursoren unter anderem MgTiO₃ und Cr₂O₃ genannt werden. In US 4,999,325 wird ein feuerfestes Erzeugnis beschrieben, das aus einem 55-85 Masse-% Magnesiachromit und 15-45 Masse-% Chromerz umfassenden Versatz erstellt ist, wobei das Chromerz Anteile an TiO₂ von 0,14 oder 0,36 Masse-% und Anteile an Cr₂O₃ von 38,4 und 55,9 Masse-% umfassen kann. WO 2012/110923 A1 offenbart feuerfeste gesinterte Werkstoffe mit 80-99 Masse-% Cr₂O₃, die auch TiO₂, MgO und ZrO₂ enthalten, wobei diesen Werkstoffen Versätze zugrunde liegen, die 92,9-98,8 Masse-% Cr₂O₃, TiO₂ und bis zu 5 Masse-% MgO aufweisen.

Der Erfindung liegt die Aufgabe zugrunde, eine Technologie zur Verfügung zu stellen, durch die ein gesintertes Chromoxid enthaltender Werkstoff zur Verfügung gestellt werden kann. Insbesondere soll durch die Technologie ein möglichst dicht gesinterter keramischer feuerfester Werkstoff zur Verfügung gestellt werden können. Der feuerfeste Werkstoff soll zudem einen möglichst hohen Anteil an gesintertem Chromoxid aufweisen können. Insbesondere ist es auch eine Aufgabe der Erfindung, einen Versatz zur Erstellung solch eines gesintertes Chromoxid enthaltenden feuerfesten Werkstoffs zur Verfügung zu stellen. Ferner ist es eine Aufgabe der vorliegenden Erfindung, einen solchen, gesintertes Chromoxid enthaltenden feuerfesten Werkstoff zur Verfügung zu stellen. Schließlich besteht eine weitere Aufgabe der Erfindung darin, ein Verfahren zur Herstellung eines solchen, gesintertes Chromoxid enthaltenden Werkstoffs zur Verfügung zu stellen.

Zur Lösung der Aufgaben wird ein Versatz zur Erstellung eines gesintertes Chromoxid enthaltenden feuerfesten Werkstoffs zur Verfügung gestellt, der die Komponenten nach Anspruch 1 umfasst.

Die Erfindung beruht insbesondere auf der Erkenntnis, dass Magnesiumtitanat als Sinterhilfsmittel für Chromoxid wirkt. Insbesondere haben die Erfinder der vorliegenden Erfindung herausgefunden, dass Magnesiumtitanat als Sinterhilfsmittel zur Unterstützung des Sinterns von Chromoxid beim Brand von Chromoxid umfassenden Versätzen zur Erstellung von keramischen feuerfesten Werkstoffen verwendbar ist. Im Rahmen der Erfindung hat sich herausgestellt, dass Magnesiumtitanat in einem Chromoxid umfassenden Versatz bewirkt, dass das Chromoxid beim Brand des Versatzes hervorragend versintert und durch die Anwesenheit von Magnesiumtitanat in einem Chromoxid umfassenden Versatz daher nach einem Brand und Versintern des Chromoxids insbesondere ein keramischer feuerfester Werkstoff mit einer hohen Dichte herstellbar ist.

Die Erfinder vermuten, dass die Wirkung von Magnesiumtitanat als Sinterhilfsmittel für Chromoxid darauf beruht, dass Magnesiumtitanat die Bildung von flüchtigen Chromoxiden, also Chromoxiden mit einem hohen Dampfdruck bei hohen Temperaturen, unterdrückt.

Soweit Magnesiumtitanat in einem erfindungsgemäßen Versatz in Form von Geikielith (MgTiO₃) verwendet wird, könnte die chemische Reaktion zwischen Magnesiumtitanat und Chromoxid beim Brand wie folgt ablaufen:

4 MgTi⁴⁺O₃ + Cr³+₂O₃ = 2 Mg₂Cr⁴+O₄ + Ti³⁺₂O₃ + 2 Ti⁴⁺O2.

Soweit das Magnesiumtitanat in dem erfindungsgemäßen Versatz beispielsweise in Form von Qandilit (Mg₂TiO₄) vorliegt, könnte die chemische Reaktion zwischen Magnesiumtitanat und Chromoxid beim Brand wie folgt ablaufen:

2 Mg₂Ti⁴⁺O₄ + Cr³+₂O₃ = 2 Mg₂Cr⁴⁺O₄ + Ti³⁺₂O₃.

Das beim Brand "in situ" gebildete Reaktionsprodukt Ti₂O₃ scheint die Bildung von flüchtigen Chromoxidarten zu unterdrücken, beispielsweise gemäß den folgenden Reaktionen:

Ti³⁺₂O₃ + 2 Cr⁴⁺O₂ = 2 Ti⁴⁺O₂ + Cr³+₂O₃

3 Ti³⁺₂O₃ + 2 Cr⁶⁺O₃ = 6 Ti⁴⁺O₂ + Cr³⁺₂O₃.

Das intermediär gebildete Magnesiumchromat wandelt sich um in die über den gesamtem Temperaturbereich stabilen Phasen Magnesiachromit und Magnesiumoxid.

Je nach Molverhältnis von Magnesiumoxid (MgO) zu Titandioxid (TiO₂) kann Magnesiumtitanat als Geikielith (MgTiO₃) mit einem Molverhältnis von MgO zu TiO₂ von 1:1 oder in Form von Qandilit (Mg₂TiO₄) mit einem Molverhältnis von MgO zu TiO₂ im Bereich von 2:1 bis 1:1 vorliegen. Bei einem Molverhältnis von MgO zu TiO₂ im Bereich von 1:2 bis 1:1 liegt Magnesiumtitanat in Form von Karrooit (MgTi₂O₅) vor. Theoretisch kann das Molverhältnis von MgO zu TiO₂ in Magnesiumtitanat im Bereich von 1:10 bis 10:1 liegen. Bevorzugt liegt das Verhältnis von MgO zu TiO₂ in dem erfindungsgemäß eingesetzten Magnesiumtitanat im Bereich von 1:2 bis 2:1. Bevorzugt kann Magnesiumtitanat in dem erfindungsgemäßen Versatz demnach in Form von Geikielith, Qandilit, Karooit oder einer Mischung dieser Magnesiumtitanat-Werkstoffe vorliegen.

Bevorzugt liegt Magnesiumtitanat als reine bis hochreine Magnesiumtitanat-Komponente im erfindungsgemäßen Versatz vor. Beispielsweise kann das Magnesiumtitanat in einer Reinheit von über 95%, also beispielsweise auch in einer Reinheit von über 98% oder über 99% in der Magnesiumtitanat-Komponente vorliegen (bezogen auf die Masse an Magnesiumtitan-Komponente).

Insbesondere kann das Magnesiumtitanat in Form einer synthetischen Magnesiumtitanat-Komponente vorliegen, die insbesondere aus reinem MgO und TiO₂ erstellt sein kann.

Erfindungsgemäß kann vorgesehen sein, dass das Magnesiumtitanat zumindest teilweise durch wenigstens einen der folgenden Stoffe ersetzt ist: Mangantitanat, Cobalttitanat, Zinktitanat, Nickeltitanat oder Eisentitanat. Damit kann Magnesiumtitanat zumindest teilweise durch ein oder mehrere Titanate vom Metallen, die in Spinelle eingebunden werden können, ersetzt sein.

Erfindungsgemäß hat sich herausgestellt, dass die Wirkung von Magnesiumtitanat als Sinterhilfsmittel für Chromoxid besonders vorteilhaft ist, wenn die Magnesiumtitanat-Komponente in einer sehr kleinen Korngröße im Versatz vorliegt. Bevorzugt liegt die Magnesiumtitanat-Komponente in einer Korngröße D₉₀ unter 20 µm vor, also beispielsweise auch in einer Korngröße D₉₀ unter 19 µm, unter 18 µm oder auch unter 15 µm.

Bevorzugt liegt Magnesiumtitanat in solchen Anteilen im erfindungsgemäßen Versatz vor, dass das Magnesiumtitanat beim Brand vollständig oder zumindest weitgehend mit dem Chromoxid im Versatz reagiert. Bevorzugt kann vorgesehen sein, dass Magnesiumtitanat mit einem Anteil von höchstens 20 Masse-% im Versatz vorliegt, also beispielsweise auch mit einem Anteil von höchstens 16, 14, 12, 10, 8, 7 oder 6 Masse-%. Ferner kann vorgesehen sein, dass das Magnesiumtitanat in dem erfindungsgemäßen Versatz in einem Anteil von wenigstens 1 Masse-% vorliegt, also beispielsweise auch in einem Anteil von wenigstens 2 oder 2,5 oder 3 oder 3,5 oder 4 Masse-%.

Soweit nicht anders angegeben, sind sämtliche Angaben zu Anteilen der Phasen und Komponenten in dem erfindungsgemäßen Versatz oder in dem erfindungsgemäßen feuerfesten Werkstoff Anteile in Masse-%, jeweils bezogen auf die Gesamtmasse des erfindungsgemäßen Versatzes beziehungsweise bezogen auf die Gesamtmasse des erfindungsgemäßen feuerfesten Werkstoffs.

Das Chromoxid liegt in dem erfindungsgemäßen Versatz in Form einer Chromoxid-Komponente vor, die beispielsweise eine oder mehrere weitgehend reine bis hochreine Chromoxid-Komponenten und/oder beispielsweise eine oder mehrere nicht reine Chromoxid-Komponenten umfassen kann, wobei in letzteren das Chromoxid beispielsweise in Mischung oder in Verbindung mit anderen Stoffen, insbesondere als Mischoxid mit anderen Oxiden, beispielsweise mit einem oder mehreren der folgenden Oxide vorliegen kann: Aluminiumoxid (Al₂O₃), Siliciumdioxid (SiO₂), Eisenoxid (Fe₂O₃), Titandioxid (TiO₂), Calciumoxid (CaO), Magnesiumoxid (MgO) oder Zirkondioxid (ZrO₂). Beispielsweise kann das Chromoxid in der nicht reinen Chromoxid-Komponente auch in Mischungen mehrerer solcher Mischoxide vorliegen. Bei den aus den vorgenannten Oxiden gebildeten Mischoxiden kann es sich beispielsweise um eines oder mehrere der folgenden Mischoxide handeln: Aluminiumoxid-Chromoxid, Aluminiumoxid-Chromoxid-Zirkoniumoxid, Chromoxid-Zirkoniumoxid, Chromoxid-Aluminiumoxid-Siliziumoxid (zum Beispiel Chromoxid-Mullit), Magnesiumoxid-Chromoxid, zum Beispiel in Form von Chromit oder Picrochromit.

Soweit das Chromoxid in dem erfindungsgemäßen Versatz beispielsweise als nicht reine Chromoxid-Komponente vorliegt, kann es beispielsweise auch in Form von Chromoxid enthaltendem Recyclingmaterial vorliegen, das beispielsweise durch aus dem Stand der Technik bekannte Zerkleinerungs- und Aufbereitungstechniken hergestellt wurde und in dieser Form im Versatz vorliegt.

Soweit nicht anders angegeben, bedeutet die Bezeichnung "Chromoxid" im Sinne der Erfindung Chromoxid in Form von Cr₂O₃.

Soweit das Chromoxid in dem erfindungsgemäßen Versatz als weitgehend reine bis hochreine Chromoxid-Komponente vorliegt, kann es insbesondere beispielsweise als Eskolait vorliegen, beispielsweise in einer Reinheit von größer 90 Masse-%, also beispielsweise auch in einer Reinheit von über 92, 95, 96, 98, 99 Masse-%, jeweils bezogen auf den Anteil an Chromoxid (Cr₂O₃) im Eskolait. Nach einer bevorzugten Ausführungsform liegt das Chromoxid im Versatz ausschließlich oder zu wenigstens 95 Masse-%, bezogen auf die Chromoxid-Komponente, als hochreine, synthetische Chromoxid-Komponente, insbesondere in Form von Eskolait, vor. Die Chromoxid-Komponenten kann bevorzugt gesintert oder aus einer Schmelze hergestellt vorliegen, beispielsweise in einer Reinheit von über 95 Masse-%, berechnet als Cr₂O₃, bezogen auf den Anteil an Chromoxid in der Chromoxid-Komponente.

Die Chromoxid-Komponente liegt bevorzugt zumindest in einem erheblichen Anteil oder aber auch vollständig in einer Körnung D₉₀ ≤ 45 µm vor. Bevorzugt liegt das Maximalkorn der reinen bis hochreinen Chromoxid-Komponente und/oder die nicht reinen Chromoxid-Komponenten in diesem Körnungsbereich im erfindungsgemäßen Versatz vor. Ferner kann erfindungsgemäß insbesondere vorgesehen sein, dass das Maximalkorn der reinen bis hochreinen Chromoxid-Komponente und/oder die nicht reinen Chromoxid-Komponenten eine Korngröße von 0,2mm oder 0,3mm nicht überschreitet.

Bevorzugt ist vorgesehen, dass die reine Chromoxid-Komponente im Versatz in einer feineren Körnung vorliegt als die nicht reinen Chromoxid-Komponenten. Beispielsweise kann vorgesehen sein, dass die D₉₀-Werte der nicht reinen Chromoxid-Komponenten wenigstens um den Faktor 3 oder 5 oder 7 oder auch 8 größer ist als die D₉₀-Werte der reinen Chromoxid-Komponente. Ein Vorteil entsprechend gröberer nicht reiner Chromoxid-Komponenten liegt beispielsweise darin, dass in diesen etwaig vorhandene, die Sinterung der Chromoxid-Komponenten nachteilig beeinflussende Substanzen bei der Sinterung des Versatzes in geringerem Maße aus der Körnung diffundieren und die Sinterung nachteilig beeinflussen.

Es ist vorgesehen, dass die Chromoxid-Komponente in einer gröberen Körnung in dem erfindungsgemäßen Versatz vorliegt als die Magnesiumtitanat-Komponente. Es ist vorgesehen, dass die D₉₀-Werte der Chromoxid-Komponente wenigstens um den Faktor 1,5 oder beispielsweise 2 oder 2,5 oder auch 3 größer sind als die D₉₀-Werte der Magnesiumtitanat-Komponente.

Falls die Magnesiumtitanat-Komponente in einer ähnlichen oder gröberen Körnung im Versatz vorliegen würde als die Chromoxid-Komponente, wäre nachteilig daran, dass die für den Sinterprozess erforderlichen Diffusionsvorgänge hierdurch gehemmt werden können. Neben einer schlechteren Versinterung eines aus einem solchen Versatz erstellten Werkstoffs kann dies insbesondere auch eine schlechtere Wirkung und/oder einen höheren Mengenbedarf der Magnesiumtitanat-Komponente im Versatz zur Folge haben.

Wie zuvor ausgeführt, umfasst der erfindungsgemäße Versatz Chromoxid insbesondere in sehr feiner Körnung, nämlich in einer Körnung D₉₀ ≤ 45 µm und mit einem Maximalkorn von nicht über 0,2 mm oder 0,3 mm. Neben dieser feinen Körnung kann der Versatz eine Komponente in einer gröberen Körnung umfassen, insbesondere in einer Körnung von wenigstens 0,3 mm, nachfolgend als "Grobkomponente" bezeichnet. Diese Grobkomponente kann insbesondere in einer Korngröße im Bereich von 0,3 mm bis 6,0 mm oder bis 4,0 mm im Versatz vorliegen.

Der erfindungsgemäße Versatz kann insoweit bevorzugt mit einer ausgeprägten Kornlücke im Bereich der Körnung von 45 µm bis 0,3 mm vorliegen. Insbesondere kann insoweit vorgesehen sein, dass maximal 10 Masse-%, also beispielsweise auch maximal 9, 8, 7, 6, 5, 4, 3 oder 2 Masse-% der Komponenten des Versatzes mit einer Korngröße im Bereich von 45 µm bis 0,3 mm vorliegen.

Bei der Grobkomponente kann es sich um wenigstens eine der folgenden Komponenten handeln: eine Komponente aus reinem Chromoxid, eine Chromoxid umfassende Komponenten oder eine Chromoxid freie Komponente.

Soweit die Grobkomponente reines Chromoxid umfasst, kann dieses beispielsweise als Eskolait vorliegen, beispielsweise in der oben genannten Reinheit.

Soweit die Grobkomponente als Chromoxid umfassende Komponente vorliegt, kann diese Komponente beispielsweise Chromoxid in Mischung oder Verbindung mit anderen Stoffen vorliegen, beispielsweise in Form eines oder mehrerer der oben genannten Mischoxide aus Chromoxid mit anderen Oxiden.
Soweit die Grobkomponente eine Chromoxid freie Komponente umfasst, kann diese grundsätzlich in Form eines beliebigen feuerfesten Werkstoffs vorliegen, beispielsweise in Form eines feuerfesten Werkstoffs aus einem oder mehreren der folgenden Komponenten: Siliciumdioxid, Aluminiumoxid, Magnesiumoxid, Calciumoxid, Zirkoniumdioxid, Eisenoxid oder Titandioxid. Besonders bevorzugt kann die Chromoxid freie Grobkomponente beispielsweise in Form wenigstens einer der folgenden feuerfesten Werkstoffe vorliegen: Zirkonmullit, Zirkonkorund oder Korund.

Soweit der Versatz eine entsprechende Grobkomponente aufweist, versintern insbesondere die Komponenten des Versatzes in einer Korngröße unter 45 µm beim keramischen Brand zu einer Matrix beziehungsweise bilden eine Bindematrix aus, in die die Komponenten des Versatzes mit einer gröberen Korngröße, insbesondere die Komponenten der Grobkomponente mit einer Korngröße von 0,3 mm und darüber, eingelagert sind.

Soweit der Versatz eine Grobkomponente, also Körnung mit einer Korngröße von wenigstens 0,3 mm aufweist, kann erfindungsgemäß insbesondere vorgesehen sein, dass der Versatz diese Grobkomponente in einem Anteil von höchstens 85 Masse-% aufweist, also beispielsweise in einem Anteil von höchstens 80, 70, 60, 50, 40, 30, 20 oder 10 Masse-%. Entsprechend kann vorgesehen sein, dass der Versatz, soweit dieser Grobkomponente aufweist, einen Anteil an der Chromoxid-Komponente mit einer Korngröße unter 45 µm von wenigstens 15 Masse-% aufweist, also beispielsweise auch einen Anteil von wenigstens 20, 30, 40, 50, 60, 70, 80 oder 90 Masse-%; erfindungsgemäß wurde festgestellt, dass aus einem Versatz, der geringere Anteile an der Chromoxid-Komponente mit einer Korngröße unter 45 µm aufweist, beim keramischen Brand nicht stets eine Bindematrix in ausreichender Menge ausbildbar ist, um die Grobkomponente einbinden zu können.

Soweit hierin zu den Versatzkomponenten Angaben zu D₉₀-Werten dieser Komponenten gemacht werden, so können die zugehörigen Kornverteilungskurven insbesondere den für dieses Komponenten aus dem Stand der Technik üblicherweise bekannten Kornverteilungskurven entsprechen, die sich insbesondere nach den für diese Komponenten aus dem Stand der Technik bekannten Herstellungs- und Fraktionierungsmethoden für diese Komponenten ergeben.

Der Anteil an Chromoxid im erfindungsgemäßen Versatz ist grundsätzlich beliebig. Insbesondere kann der Anteil an Chromoxid im Versatz von der Art und Zusammensetzung der verwendeten Chromoxid-Komponente sowie der Grobkomponente abhängen. Nach einer Ausführungsform ist vorgesehen, dass der Anteil an Chromoxid im Versatz bei wenigstens 80 Masse-% liegt, also beispielsweise auch bei wenigstens 82, 84, 86, 88, 90, 92, 94, 96 oder auch 98 Masse-%. Insbesondere, soweit der Anteil an Chromoxid im Versatz bei über 90 Masse-% liegt, kann dies insbesondere erreicht werden, wenn das Chromoxid zumindest vorwiegend in Form reiner bis hochreiner Chromoxid-Komponenten im Versatz vorliegt.

Der Anteil an Chromoxid im Versatz kann insbesondere durch gezielte Mischung von Anteilen an reinen und nicht reinen Chromoxid-Komponenten eingestellt werden.

Durch den erfindungsgemäßen Versatz ist es möglich, einen sehr dicht gesinterten feuerfesten keramischen Werkstoff mit einem hohen Anteil an gesintertem Chromoxid, insbesondere auch mit Anteilen an Chromoxid von über 80 Masse-% oder auch von über 90 Masse-%, zu erstellen. Mit den aus dem Stand der Technik bekannten Technologien war es bisher praktisch kaum möglich, einen sehr dicht gesinterten feuerfesten Werkstoff herzustellen, der entsprechend hohe Anteile an Chromoxid aufwies.

Soweit das Chromoxid zumindest teilweise in Form eines oder mehrerer Chromoxid-Komponenten im erfindungsgemäßen Versatz vorliegt, die aus Mischoxiden gebildet sind und/oder soweit die Grobkomponente Komponenten umfasst, die nicht aus reinem Chromoxid gebildet sind oder auch kein Chromoxid aufweisen, kann der Anteil an Chromoxid im Versatz auch deutlich unter 80 Masse-% liegen, also beispielsweise bei nur wenigstens 8 Masse-%, also beispielsweise auch bei nur wenigstens 20, 40, 60 oder 70 Masse-%.

Der Anteil an Chromoxid im erfindungsgemäßen Versatz ist jeweils angegeben als Massenanteil an Cr₂O₃ am gesamtem Versatz.

Neben den vorgenannten Komponenten des erfindungsgemäßen Versatzes, also insbesondere den Chromoxid sowie Magnesiumtitanat enthaltenen Komponenten, kann der Versatz weitere Komponenten enthalten, insbesondere weitere Komponenten, die in Versätzen zur Erstellung von feuerfesten Werkstoffen typischerweise eingesetzt werden, also beispielsweise feuerfeste oxidische oder nicht-oxidische Werkstoffe, beispielsweise Werkstoffe aus einem oder mehreren der folgenden Komponenten: Siliciumdioxid, Aluminiumoxid, Magnesiumoxid, Calciumoxid, Zirkoniumdioxid, Eisenoxid, Titandioxid. Diese weiteren Komponenten können insbesondere als Grobkomponente im Versatz vorliegen.

Erfindungsgemäß kann insbesondere auch vorgesehen sein, dass der erfindungsgemäße Versatz bestimmte Komponenten, die die Herstellung eines gesinterten, insbesondere dicht gesinterten Chromoxid enthaltenden feuerfesten Werkstoffs aus dem erfindungsgemäßen Versatz behindern oder sogar hemmen, nicht oder nur in geringen Anteilen aufweist. Im Rahmen der Erfindung hat sich insbesondere herausgestellt, dass Alkalien, Übergangsmetalle oder Stoffe, die solche Komponenten enthalten, die Sintereigenschaften des erfindungsgemäßen Versatzes verschlechtern können. Erfindungsgemäß kann daher insbesondere vorgesehen sein, dass Alkalien, Übergangsmetalle oder Verbindungen hieraus, insbesondere Oxide hieraus, beispielsweise Na₂O, K₂O oder Vanadiumoxid, jeweils in Anteilen unter 2 Masse-%, insbesondere in Anteilen unter 1 Masse-%, unter 0,5 Masse-% oder auch unter 0,1 Masse-% im Versatz vorliegen. Ferner kann sich auch SiO₂ nachteilig auf die Sintereigenschaften des erfindungsgemäßen Versatzes auswirken, so dass vorgesehen sein kann, dass SiO₂ in Anteilen unter 4 oder 3 oder 2 oder 1 Masse-% im Versatz vorliegt. Da die nachteilige Wirkung von SiO₂ im erfindungsgemäßen Versatz insbesondere von der Körnung der SiO₂ enthaltenden Komponenten abhängt, kann vorgesehen sein, dass der Anteil von SiO₂ im Versatz unter 2 Masse-% oder auch unter 1 Masse-% liegt, soweit die SiO₂ enthaltenden Komponenten in einer Körnung mit D₉₀-Werten unter 300µm vorliegen; soweit SiO₂ enthaltende Komponenten in einer gröberen Körnung vorliegen, also insbesondere mir D₉₀-Werten über 300µm, kann der Anteil von SiO₂ im Versatz bei bis zu 5 oder 4 oder 3 Masse-% liegen.

Gegenstand der Erfindung ist ferner ein gesintertes Chromoxid enthaltender feuerfester Werkstoff, der durch einen Brand eines hierin beschriebenen, erfindungsgemäßen Versatzes erhalten wird beziehungsweise erstellt ist. Der gesintertes Chromoxid enthaltende feuerfester Werkstoff wird erhalten, indem der erfindungsgemäße Versatz einem keramischen Brand unterworfen wird. Dabei versintern Komponenten des erfindungsgemäßen Versatzes und insbesondere auch der oder die Chromoxid enthaltenden Komponenten des Versatzes. Anschließend wird ein gesintertes Chromoxid enthaltender feuerfester Werkstoff erhalten.

Gegenstand der Erfindung ist ferner ein feuerfester Werkstoff, der insbesondere durch einen Brand eines erfindungsgemäßen, hierin beschriebenen Versatzes erstellt sein kann, umfassend
gesintertes Chromoxid;
Magnesiachromit;
Titandioxid; sowie
gegebenenfalls weitere Komponenten.

Gemäß den oben angegebenen Reaktionsgleichungen reagieren Magnesiumtitanat und Chromoxid beim keramischen Brand des erfindungsgemäßen Versatzes zu Chromoxid, Magnesiachromit (MgCr₂O₄) sowie Titandioxid (TiO₂). Ein aus dem erfindungsgemäßen Versatz durch einen keramischen Brand erstellter feuerfester Werkstoff umfasst damit Anteile an Chromoxid, insbesondere gesintertem Chromoxid, Magnesiachromit sowie Titandioxid.

Magnesiumtitanat und Chromoxid reagieren beim keramischen Brand des erfindungsgemäßen Versatzes insbesondere soweit zu Chromoxid, Magnesiachromit und Titandioxid miteinander, soweit sie in einer geringen Korngröße, insbesondere mit einer Korngröße unter 0,3 mm im Versatz vorliegen, insbesondere soweit sie in einer Korngröße unter 0,3 mm und mit einer Körnung D₉₀ ≤ 45 µm oder auch soweit sie vollständig in einer Korngröße unter 45 µm im Versatz vorliegen. Die gröberen Anteile an Chromoxid oder Chromoxid umfassenden Komponenten im Versatz, insbesondere auch die Grobkomponente, reagieren weniger mit dem Magnesiumtitanat des Versatzes. Soweit neben Komponenten im Versatz mit einer wie vorstehend geringen Korngröße neben einer Grobkomponente vorliegen, bilden die Komponenten mit einer geringen Korngröße eine Bindematrix aus, in die die Grobkomponente mit einer Korngröße von 0,3 mm und darüber eingelagert ist.
Chromoxid kann in dem erfindungsgemäßen feuerfesten Werkstoff, soweit dieser aus einem keine Grobkomponente umfassenden Versatz erstellt ist, beispielsweise in Anteilen von wenigsten 60 oder 70 Masse-% vorliegen. Besonders bevorzugt liegt der Anteil an Chromoxid im erfindungsgemäßen feuerfesten Werkstoff bei wenigstens 80 Masse-%, also beispielsweise auch bei wenigstens 82, 84, 86 oder 88 Masse-%. Ferner kann der Anteil an Chromoxid im feuerfesten Werkstoff beispielsweise bei höchstens 94 Masse-% liegen, also beispielsweise auch bei höchstens 92, 90 oder 88 Masse-%.

Magnesiachromit kann im erfindungsgemäßen feuerfesten Werkstoff, soweit dieser aus einem keine Grobkomponente umfassenden Versatz erstellt ist, beispielsweise in Anteilen von wenigstens 3 Masse-% vorliegen, also beispielsweise auch in Anteilen von wenigstens 5, 7, 10 oder 12 Masse-%. Ferner kann der Anteil an Magnesiachromit im feuerfesten Werkstoff bei höchstens 30 Masse-% liegen, also beispielsweise auch bei höchstens 27, 25, 22, 20, 17, 15 oder 12 Masse-%.

Titandioxid kann im erfindungsgemäßen feuerfesten Werkstoff, soweit dieser aus einem keine Grobkomponente umfassenden Versatz erstellt ist, beispielsweise in einem Anteil von wenigstens 1 Masse-% vorliegen, also beispielsweise auch in Anteilen von wenigstens 2, 3 oder 4 Masse-%. Ferner kann der Anteil an Titandioxid im feuerfesten Werkstoff beispielsweise bei höchstens 10 Masse-% liegen, also beispielsweise auch bei höchstens 8, 6, 4, 3 oder 2 Masse-%.

Soweit der erfindungsgemäße feuerfeste Werkstoff aus einem Versatz erstellt ist, der Grobkomponente umfasst, gelten die vorgemachten Angaben zu den Anteilen an Chromoxid, Magnesiachromit und Titandioxid für die Bindematrix, in die die Grobkomponente nach dem keramischen Brand eingelagert ist. Hinsichtlich der Massenanteile und Zusammensetzung der Grobkomponente im feuerfesten Erzeugnis gelten die entsprechenden Ausführungen zu den Massenanteilen und zur Zusammensetzung der Grobkomponente im Versatz entsprechend, da sich diese während des keramischen Brandes praktisch nicht verändern.

Neben Chromoxid, Magnesiachromit und Titandioxid und gegebenenfalls Grobkomponente kann der erfindungsgemäße feuerfeste Werkstoff weitere Komponenten umfassen, insbesondere beispielsweise eine oder mehrere der weiteren vorgenannten Komponenten beziehungsweise Stoffe, die Versätze zur Erstellung von feuerfesten Werkstoffen typischerweise enthalten können, sowie Mischungen oder Reaktionsprodukte aus diesen Komponenten beziehungsweise Stoffen.

Gegenstand der Erfindung ist ferner ein Verfahren zur Herstellung eines gesintertes Chromoxid enthaltenden feuerfesten Werkstoffes mit folgenden Schritten:
Zur Verfügungstellung eines hierin beschriebenen, erfindungsgemäßen Versatzes;
Brennen des Versatzes zu einem feuerfesten Werkstoff.

Dem zur Verfügung gestellten, erfindungsgemäßen Versatz kann ein Bindemittel zugegeben werden. Dabei kann grundsätzlich ein beliebiges, aus dem Stand der Technik bekanntes Bindemittel für Chromoxid umfassende beziehungsweise chromoxidreiche Versätze eingesetzt werden, beispielsweise wenigstens ein organisches, insbesondere ein temporäres organisches Bindemittel wie Polyvinylalkohol, Methylcellulose oder Dextrin. Bindemittel kann der Versatz beispielsweise in Anteilen im Bereich von 1 bis 15 Masse-% aufweisen, wobei der Anteil insbesondere von der weiteren Behandlung des Versatzes, insbesondere beispielweise der Art der Formung abhängig gemacht werden kann.

Der, insbesondere mit einem Bindemittel versehene, Versatz kann gemischt werden, so dass sich die Komponenten des Versatzes und das Bindemittel möglichst gleichmäßig miteinander vermischen.

Der Versatz kann, insbesondere im Anschluss an das Mischen, geformt werden, soweit durch das Verfahren ein geformtes feuerfestes Erzeugnis, also insbesondere ein feuerfester Stein erstellt werden soll. Insbesondere kann der Versatz durch Pressen zu einem geformten Erzeugnis geformt werden. Der durch die Formgebung erhaltene, ungebrannte geformte Körper ("Grünkörper") kann anschließend getrocknet werden, beispielsweise in einem Trockner, bevor er dem Brand unterworfen wird.

Nachdem der Versatz gegebenenfalls durch einen oder mehrere der vorbeschriebenen Verfahrensschritte behandelt worden ist, wird er zu einem feuerfesten Werkstoff gebrannt. Bei einem entsprechenden keramischen Brand kommt es insbesondere zu einer Versinterung des Chromoxids des Versatzes, so dass der nach dem Brennen erhaltene feuerfeste Werkstoff gesintertes Chromoxid enthält.

Besonders bevorzugt handelt es sich bei dem Brand um einen reduzierenden Brand, also einen Brand in einer reduzierenden Atmosphäre. Zur Ausbildung eines reduzierenden Brandes kann erfindungsgemäß insbesondere vorgesehen sein, den Versatz in Anwesenheit von Kohle, insbesondere in Anwesenheit von Kohlegries durchzuführen. Nach einer besonders bevorzugten Ausführungsform wird der Brand über Kohlegries durchgeführt, wodurch sich sehr vorteilhafte reduzierende Bedingungen für den Brand des Versatzes einstellen.

Erfindungsgemäß kann insbesondere vorgesehen sein, den Versatz bei einer Temperatur im Bereich von 1.600 bis 1.800 °C zu brennen, besonders bevorzugt bei einer Temperatur im Bereich von 1.630 bis 1.670 °C. Insbesondere, soweit der Brand im vorbezeichneten Temperaturbereich durchgeführt wird, kann die Brenndauer (Haltezeit auf Sintertemperatur) im Bereich von 3 bis 9 Stunden liegen, besonders bevorzugt im Bereich von 4 bis 8 oder im Bereich von 5 bis 7 Stunden.

Ein erfindungsgemäßer feuerfester Werkstoff zeichnet sich in der Regel durch ein typisches Gefüge aus. Dabei zeigt das Gefüge des feuerfesten Werkstoffs in der Regel eine Matrix aus Chromoxid, in die Magnesiachromit eingelagert ist. Die Matrix aus Chromoxid ist im Wesentlichen gebildet von Körnern aus Chromoxid, die miteinander versintert sind. Das Magnesiachromit ist typischerweise in Form von Körnern, also in Form einzelner "Inseln" in die Matrix aus Chromoxid eingelagert. Typischerweise zeichnet sich das Gefüge durch eine sehr gleichmäßige Porenstruktur aus. Die Poren des feuerfesten Werkstoffs weisen typischerweise eine sehr gleichmäßige Porengröße auf, die in der Regel deutlich unter der Korngröße der Körner aus Chromoxid liegt. Das Titandioxid liegt fein verteilt im Chromoxidgefüge vor, wobei im Magnesiachromitkorn niedrigere Gehalte an Titandioxid als in den umgebenden Chromoxidkörner gemessen wurden. Gegebenenfalls können im feuerfesten Werkstoff noch Reste metallischen Chroms vorliegen, in der Regel jedoch unter 1 Masse-%. Soweit solch metallisches Chrom im Werkstoff vorliegt, befindet sich dieses typischerweise im Randbereich der Körner aus Magnesiachromit.

Die vorstehenden Angaben zum Gefüge eines erfindungsgemäßen Werkstoffs gelten, soweit dieser aus einem Versatz erstellt ist, der keine Grobkomponente aufwies. Soweit der erfindungsgemäße feuerfeste Werkstoff aus einem Versatz erstellt ist, der Grobkomponente aufwies, weist die Bindematrix, in die die Körner der Grobkomponente eingelagert sind, das vorstehende Gefüge auf. In dieses Gefüge sind als große "Inseln" die Körner der Grobkomponente eingelagert.

Ein erfindungsgemäßer feuerfester Werkstoff zeichnet sich durch eine für feuerfeste Werkstoffe mit einem hohen Anteil an gesintertem Chromoxid verhältnismäßig hohe Dichte aus. Beispielsweise kann die Rohdichte eines erfindungsgemäßen feuerfesten Werkstoffs im Bereich von 4,3 bis 4,9 g/cm³ liegen, also beispielsweise auch im Bereich von 4,5 bis 4,8 g/cm³ oder im Bereich von 4,55 bis 4,75 g/cm³. Die Rohdichte kann insbesondere gemäß DIN EN 993-1:1995 bestimmt sein.

Ferner kann sich ein erfindungsgemäßer feuerfester Werkstoff durch eine für feuerfeste Werkstoffe mit einem hohen Anteil an gesintertem Chromoxid verhältnismäßig geringe Porosität auszeichnen. Beispielsweise kann die offene Porosität des erfindungsgemäßen feuerfesten Werkstoffs im Bereich von 1 bis 20 Volumen-% liegen, also beispielsweise auch im Bereich von 2 bis 15 oder im Bereich von 2 bis 10 Volumen-%, jeweils bezogen auf das Volumen des feuerfesten Werkstoffs. Die offene Porosität kann insbesondere bestimmt sein gemäß DIN EN 993-1:1995.

Bei dem erfindungsgemäßen feuerfesten Werkstoff kann es sich grundsätzlich um einen beliebigen feuerfesten Werkstoff handeln und als beliebiges Produkt ausgeführt sein. Beispielsweise kann es sich bei dem erfindungsgemäßen feuerfesten Werkstoff um ein geformtes feuerfestes Erzeugnis oder ein ungeformtes feuerfestes Erzeugnis handeln. Bevorzugt handelt es sich bei dem erfindungsgemäßen feuerfesten Werkstoff um ein geformtes feuerfestes Erzeugnis, also insbesondere beispielsweise einen feuerfesten Stein. Entsprechend kann der erfindungsgemäße Versatz insbesondere zur Erstellung eines solchen feuerfesten Werkstoffes dienen und entsprechenden ausgebildet sein.

Gegenstand der Erfindung ist ferner die Verwendung von Magnesiumtitanat als Sinterhilfsmittel zur Unterstützung des Sinterns von Chromoxid beim Brand von Chromoxid umfassenden Versätzen. Die Verwendung von Magnesiumtitanat kann dabei gemäß der hierin beschriebenen, erfindungsgemäßen Technologie erfolgen.

Der erfindungsgemäße feuerfeste Werkstoff sowie die durch den erfindungsgemäßen Versatz erstellbaren feuerfesten Werkstoffe können insbesondere dort eingesetzt werden, wo hoch korrosionsbeständige feuerfeste Werkstoffe benötigt werden, also beispielsweise in der Eisen- und Stahlindustrie, der Nichteisenindustrie, der Glasindustrie, bei der Kohlevergasung oder bei der Abfallverbrennung.

Ein erstes Ausführungsbeispiel eines erfindungsgemäßen Versatzes ohne Grobkomponente lautet wie folgt: Der Versatz weist einen Anteil an Chromoxid-Komponente in Höhe von etwa 96 Masse-% und einen Anteil an Magnesiumtitanat-Komponente in Höhe von etwa 4 Masse-% auf. Der Anteil an Chromoxid in der Chromoxid-Komponente liegt bei etwa 95 Masse-% (bezogen auf die Chromoxid-Komponente), womit sich ein Anteil an Chromoxid im Versatz von etwa 91 Masse-% ergibt. Die Chromoxid-Komponente enthält ferner Anteile an den Oxiden Aluminiumoxid, Siliciumdioxid, Eisenoxid, Calciumoxid, Magnesiumoxid und Zirkondioxid, wobei manche dieser Oxide, insbesondere Siliciumdioxid, nur in Spuren vorhanden sind. Das Magnesiumtitanat liegt in Form einer hochreinen, synthetisch erstellten Magnesiumtitanat-Komponente mit einer Reinheit von über 99 Masse-% Magnesiumtitanat (bezogen auf die Magnesiumtitanat-Komponente) vor. Der Anteil an Magnesiumtitanat im Versatz liegt damit bei etwa 4 Masse-%. Die Chromoxid-Komponente liegt in körniger Form mit einer Korngröße D₉₀ von 45 µm und die Magnesiumtitanat-Komponente liegt ebenfalls in körniger Form mit einer Korngröße D₉₀ von 20 µm vor.

Ein zweites Ausführungsbeispiel eines erfindungsgemäßen Versatzes mit Grobkomponente lautet wie folgt: Der Versatz weist einen Anteil von 45 Masse-% einer ersten, feineren Körnung auf, die gemäß dem vorstehenden ersten Ausführungsbeispiel zusammengesetzt ist. Daneben weist der Versatz einen Anteil an Grobkomponente von 55 Masse-% auf. Die Grobkomponente setzt sich zusammen aus einer Komponente aus reinem Chromoxid, einer Chromoxid umfassenden Komponenten sowie einer Chromoxid freien Komponente. Dabei weist die Grobkomponente jeweils die folgenden Komponenten in den folgenden Anteilen auf, jeweils bezogen auf die Gesamtmasse des Versatzes: reines Chromoxid 25 Masse-% mit einer Korngröße von 1,0 bis 3,0 mm; Chromoxid umfassende Komponente in Form von Aluminiumoxid-Chromoxid in einem Anteil von 20 Masse-% und einer Korngröße von 0,3 bis 2,0 mm sowie in Form von Chromoxid-Zirkoniumoxid in einem Anteil von 6 Masse-% und einer Korngröße von 0,3 bis 3,0 mm; Chromoxid freie Komponente in Form von Zirkonmullit in einem Anteil von 4 Masse-% und einer Korngröße von 1,6 bis 3,2 mm.

Ein Ausführungsbeispiel eines erfindungsgemäßen feuerfesten Werkstoffes, der auf Basis eines keine Grobkomponente umfassenden Versatzes erstellt ist, lautet wie folgt: Der feuerfeste Werkstoff weist einen Anteil an Chromoxid von etwa 80 Masse-%, einen Anteil an Magnesiachromit in Höhe von etwa 12 Masse-%, einen Anteil an Titandioxid von etwa 3 Masse-% sowie einen Anteil von etwa 5 Masse-% an weiteren Komponenten auf. Die weiteren Komponenten sind die Oxide Aluminiumoxid, Siliciumdioxid, Eisenoxid, Calciumoxid, Magnesiumoxid und Zirkondioxid oder aus diesen Oxiden gebildete Mischoxide, wobei diese Oxide (insbesondere Siliciumdioxid) und Mischoxide teilweise nur in Spuren im Werkstoff vorliegen.

Ein Ausführungsbeispiel eines erfindungsgemäßen Verfahrens lautet wie folgt: Zunächst wird ein Versatz gemäß dem zuvor beschriebenen ersten Ausführungsbeispiel zur Verfügung gestellt. Dem Versatz wird ein Binder in Form von Polyvinylalkohol zugegeben, und zwar in Form einer Lösung in Wasser mit einer Konzentration von 11 Masse-% Polyvinylalkohol, bezogen auf den Binder. Der Binder wird dem Versatz in einer Menge von 5 Masse-% des Versatzes zugegeben. Der mit dem Binder versehene Versatz wird gemischt und anschließend durch Pressen zu einem Grünkörper geformt. Der Grünkörper wird anschließend mit einer Aufheizrate von 120 °C/h auf eine Brenntemperatur 1.650°C erhitzt und 6 Stunden bei dieser Temperatur gebrannt. Das Brennen wird bei reduzierenden Bedingungen durchgeführt, indem in einem geschlossenen Ofen der Grünkörper auf Kohlegries gesetzt und gebrannt wird. Anschließend wird das gebrannte Erzeugnis gekühlt, wonach man einen feuerfesten Werkstoff in Form eines geformten feuerfesten Erzeugnisses erhält.

Weitere Merkmale der Erfindung ergeben sich aus den Patentansprüchen, den Figuren sowie der zugehörigen Figurenbeschreibung.

Sämtliche Merkmale der Erfindung können, einzeln oder in Kombination, beliebig miteinander kombiniert sein.

Die beigefügten Figuren zeigen mikroskopische Aufnahmen von polierten Schnittflächen von Ausführungsbeispielen erfindungsgemäßer feuerfester Werkstoffe, die auf Basis eines Versatzes ohne Grobkomponente erstellt sind.

Die Aufnahmen wurden bei 800-facher Vergrößerung erstellt. Der weiße Balken im unteren Bereich der Bilder entspricht einer Länge von 20 µm.

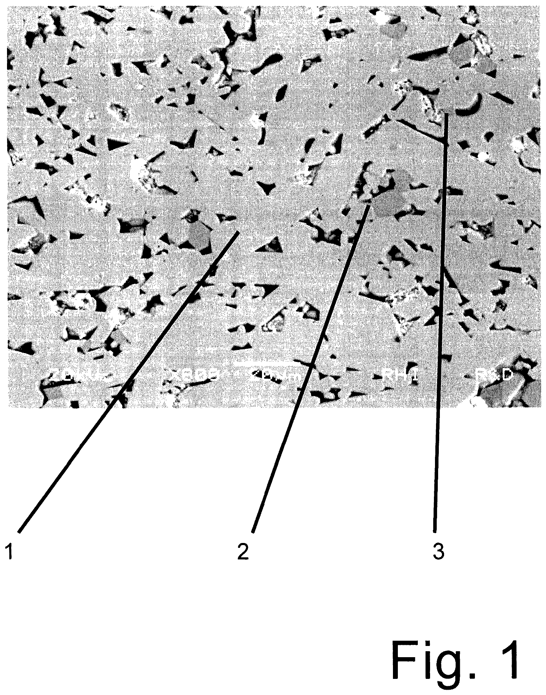

Der feuerfeste Werkstoff gemäß Figur 1 wurde durch ein Verfahren gemäß dem vorbezeichneten Ausführungsbeispiel erstellt.

Die Körner aus Chromoxid (1) sind weitgehend miteinander versintert, so dass die Korngrenzen praktisch nicht mehr zu erkennen sind. In Figur 1 sind die hellen, länglichen Schnittflächen der Körner aus Chromoxid (1) zu erkennen. Eingebettet in die versinterten Körner aus Chromoxid (1) ist Magnesiachromit (2). Ferner sind Poren (3) zu erkennen.

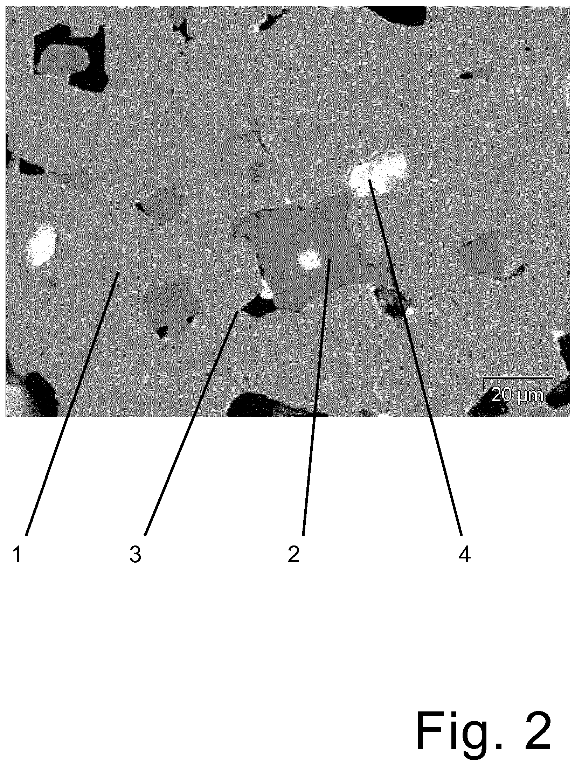

Bei dem Ausführungsbeispiel nach Figur 2 wurde der Werkstoff im Unterschied zu dem im Ausführungsbeispiel beschriebenen Versatz, Werkstoff und Verfahren durch einen Versatz erstellt, bei dem der Anteil an Magnesiumtitanat im Versatz bei 6 Masse-% lag.

Im Unterschied zum feuerfesten Werkstoff gemäß Figur 1 sind die versinterten Körner aus Chromoxid (1) wesentlich größer ausgebildet. Ferner sind die zwischen den Körnern aus Chromoxid verbleibenden Freiräumen (Poren) wesentlich größer und seltener als im Ausführungsbeispiel gemäß Figur 1. Magnesiachromit (2) liegt in Form von Körnern vereinzelt zwischen den Körnern (1) aus Chromoxid vor. Im Randbereich der Körner aus Magnesiachromit (2) sind geringe Menge an metallischem Chrom (3) zu erkennen. Mit dem Bezugszeichen (4) ist eine durch das Polieren der Schnittfläche entstandene Unreinheit gekennzeichnet (Blei aus dem verwendeten Poliermittel).

Titandioxid ist in den Figuren nicht optisch zu erkennen.

## Patentansprüche

1. Versatz zur Erstellung eines gesintertes Chromoxid enthaltenden feuerfesten Werkstoffs, der die folgenden Komponenten umfasst:
1.1 Chromoxid;
1.2 Magnesiumtitanat;
1.3 gegebenenfalls weitere Komponenten, wobei
1.4 die D₉₀-Werte der Komponente Chromoxid wenigstens um den Faktor 1,5 größer sind als die D₉₀-Werte der Komponente Magnesiumtitanat.

2. Versatz nach Anspruch 1 mit einem Anteil an Chromoxid von wenigstens 80 Masse-%.

3. Versatz nach wenigstens einem der vorhergehenden Ansprüche mit einem Anteil an den Magnesiumtitanat von höchstens 20 Masse-%.

4. Gesintertes Chromoxid enthaltender feuerfester Werkstoff, erhalten durch einen Brand eines Versatzes nach wenigstens einem der Ansprüche 1 bis 3.

5. Feuerfester Werkstoff nach Anspruch 4, umfassend
5.1 gesintertes Chromoxid;
5.2 Magnesiachromit;
5.3 Titandioxid;
5.4 gegebenenfalls weitere Komponenten; wobei der Werkstoff
5.5 eine Komponente in einer Korngröße von wenigstens 0,3 mm umfasst, die
5.6 in die Bindematrix aus Chromoxid, Magnesiachromit und Titandioxid eingelagert ist.

6. Verfahren zur Herstellung eines gesintertes Chromoxid enthaltenden feuerfesten Werkstoffs mit folgenden Schritten:
6.1 Zur Verfügungstellung eines Versatzes nach wenigstens einem der Ansprüche 1 bis 3;
6.2 Brennen des Versatzes zu einem feuerfesten Werkstoff.

## Claims

1. A batch for the production of a refractory material containing sintered chromium oxide, comprising the following components:
1.1 chromium oxide;
1.2 magnesium titanate;
1.3 optionally, other components, wherein
1.4 the D₉₀ values of the chromium oxide component are larger by at least a factor of 1,5 than the D₉₀ values of the magnesium titanate component.

2. The batch according to claim 1, with a chromium oxide content of at least 80% by weight.

3. The batch according to at least one of the preceding claims, with a magnesium titanate content of at most 20% by weight.

4. A refractory material containing sintered chromium oxide, obtained by firing a batch according to at least one of claims 1 to 3.

5. Refractory material according to claim 4, comprising
5.1 sintered chromium oxide;
5.2 magnesium chromite;
5.3 titanium dioxide;
5.4 optionally, other components; wherein the material
5.5 comprises a component in a grain size of at least 0.3 mm, which
5.6 is embedded in the binding matrix of chromium oxide, magnesium chromite and titanium dioxide.

6. A method for the manufacture of a refractory material containing sintered chromium oxide, comprising the following steps:
6.1 providing a batch according to at least one of claims 1 to 3;
6.2 firing the batch to form a refractory material.

## Revendications

1. Mélange destiné à créer un matériau réfractaire, contenant de l'oxyde de chrome, qui comprend les composants suivants :
1.1 de l'oxyde de chrome ;
1.2 du titanate de magnésium ;
1.3 le cas échéant, des composants supplémentaires,
1.4 les valeurs D₉₀ du composant oxyde de chrome étant supérieures d'au moins le coefficient 1,5 aux valeurs D₉₀ du composant titanate de magnésium.

2. Mélange selon la revendication 1, avec une part d'oxyde de chrome d'au moins 80 % en masse.

3. Mélange selon au moins l'une quelconque des revendications précédentes, avec une part de titanate de magnésium d'un maximum de 20 % en masse.

4. Matériau réfractaire contenant de l'oxyde de chrome fritté, obtenu par une cuisson d'un mélange selon au moins l'une quelconque des revendications 1 à 3.

5. Matériau réfractaire selon la revendication 4, comprenant :
5.1 de l'oxyde de chrome fritté ;
5.2 de la chromite de magnésie ;
5.3 du dioxyde de titane ;
5.4 le cas échéant, des composants supplémentaires ; le matériau comprenant
5.5 un composant d'une grosseur de grains d'au moins 0,3 mm, qui
5.6 est stocké dans la matrice de liaison en oxyde de chrome, chromite de magnésie et dioxyde de titane.

6. Procédé de fabrication d'un matériau réfractaire contenant de l'oxyde de chrome fritté, comportant les étapes suivantes :
6.1 de la mise à disposition d'un mélange selon au moins l'une quelconque des revendications 1 à 3 ;
6.2 de la cuisson du mélange en un matériau réfractaire.
